# EUROPEAN PATENT SPECIFICATION

(11) **EP 2 687 074 B1**
(45) Date of publication and mention of the grant of the patent: **02.07.2014**
(21) Application number: 13175118.2
(22) Date of filing: 04.07.2013
(51) Int. Cl.: A01B 73/00

(54) **Support carriage for an agricultural machine**
Stützträger für eine landwirtschaftliche Maschine
Chariot de support pour machine agricole

(30) Priority: 16.07.2012 GB 201212661
(43) Date of publication of application: 22.01.2014
(73) Proprietor: Kverneland Group Kerteminde AS, 5300 Kerteminde (DK)
(72) Inventor: Pedersen, Peder, 5853 Ørbaek (DK)
(74) Representative: Raynor, Simon Mark

(56) References cited:
- EP-A1- 0 509 306
- EP-A1- 1 008 285
- US-A- 4 555 897
- US-B1- 6 260 629

## Description

The present invention relates to a support carriage for an agricultural machine that is configured to be towed behind a tractor, and to an agricultural machine that includes such a support carriage. In particular but not exclusively the invention relates to a trailed mower and a support carriage therefor. However, the invention also relates to other kinds of trailed agricultural machine, including for example rakes, tedders, swathing machines, choppers, packers, rollers and seeding bars.

A conventional trailed mower includes a cutter bar that carries a number of rotating cutter heads, which is supported by wheels and is attached to a tractor by a drawbar. During working operation the mower is trailed behind the tractor and is usually displaced to one side of the path followed by the tractor so that it can cut crop without the crop being crushed beneath the wheels of the tractor.

For efficient mowing it is desirable to provide a wide cutter bar so as to cut a large swath width. For example, the mower may have a working width of 5 to 6 metres or possibly more. However, for transport along roads and through gates and entrances the mower must have a small transport width, for example in the range 2.8 to 3 metres. It is therefore necessary that the mower can be adjusted between two different configurations for working operation and transportation.

DE 29714523 U1 describes a trailed mower with two sets of wheels including a pair of working wheels that are located at opposite ends of the cutter bar and a pair of transport wheels that are mounted on opposite sides of the cutter bar and are set at 90° to the working wheels. These transport wheels can be either raised or lowered. During working operation, the transport wheels are raised and do not touch the ground. During transportation, the transport wheels are lowered to support the cutter bar and the cutter bar is then rotated through 90° and drawn lengthwise behind the tractor. Although this arrangement provides a narrow transport width, the mechanism is complex and heavy requiring two additional wheels as well as the support structure for those wheels and a drive mechanism for raising and lowering the wheels.

EP 0509306A describes a trailed mower in which the cutter bar is supported by a pair of wheels that trail behind the mower unit during working operation. During transportation the drawbar is rotated so that the mower unit is drawn directly behind the tractor and the mower unit is partially rotated to provide a reduced transport width. When the mower unit is in the transport position the support wheels extend outwards to one side of the mower unit. Therefore, although the transport width of the mower is reduced, it is still quite large. Furthermore, because both wheels are located on the same side of the mower unit when it is in the transport configuration they do not provide ideal support for the mower unit, leading to instability during transportation.

US 4555897 describes a transportable wide swath trailing implement that is able to convert from a wide-swath working mode to a narrower folded mode for transport. The implement includes a pivoting drawbar and wheel legs, which can be adjusted to convert the implement between the two modes. Owing to the length of the wheel legs the wheels are located a large distance from the cross-member of the implement in both the transport mode and the working mode. Also, when the implement is in the working mode the wheels are not located co-axially. These factors adversely affect the stability of the implement.

It is an object of the present invention to provide a support carriage for an agricultural machine that mitigates at least some of the aforesaid problems. Another object of the present invention to provide an agricultural machine that mitigates at least some of the aforesaid problems.

According to one aspect of the present invention there is provided a support carriage for an agricultural machine that is configured to be towed behind a tractor, wherein the support carriage is adjustable between a working configuration in which the agricultural machine has a working width W and a transport configuration in which the agricultural machine has a transport width T that is less than the working width W, the support carriage including a drawbar, a cross-member that is attached to the drawbar and is pivotable relative thereto between a working configuration and a transport configuration, a first support wheel mounted on a first support arm that is pivotably attached to the cross-member for rotation about a first pivot axis, and a second support wheel mounted on a second support arm that is pivotably attached to the cross-member for rotation about a second pivot axis, wherein the first support arm is pivotable through an angle X between a working position and a transport position, and the second support arm is pivotable through an angle Y between a working position and a transport position where Y is substantially equal to X + 180°, and wherein the first support arm is connected to the cross member by a first stub arm that is located towards a first end of the cross-member, and the second support arm is connected to the cross member by a second stub arm that is located towards a second end of the cross-member, wherein the first stub arm has a length L1 and the second stub arm has a length L2 where L1 < L2.

The support carriage of the present invention is capable of supporting an agricultural machine that has a very wide working width, but which also has a very narrow transport width. The agricultural machine is therefore capable of very efficient working operation but can be transported easily along public roads and lanes and through gateways and entrances. The support carriage provides very stable support for the agricultural machine both during a working operation and also during transportation. The mechanism is relatively simple and also light in weight. Another advantage of the invention is that the support arms do not have to rotate synchronously between the working position and the transport position.

Advantageously, the angle X is in the range 30° < X < 120°, preferably 70° < X < 90°. For example, the angle X is typically approximately 80°.

Advantageously, the first and second support arms are pivotable between respective working positions in which the support wheels are positioned towards opposite ends (lengthwise) of the cross-member, and respective transport positions in which the support wheels are positioned on opposite sides (widthwise) of the cross-member. Therefore, when the support carriage is in the working configuration the support wheels are widely spaced to provide stable support for the agricultural machine. When the support carriage is in the transport configuration the support wheels are located much closer together to provide a narrow transport width. However, as the wheels are positioned on opposite sides of the cross-member they still provide stable support for the agricultural machine.

Advantageously, the first and second support wheels are substantially coaxially located when the first and second support arms are in the working positions. Advantageously, the first and second support wheels are substantially coaxially located when the first and second support arms are in the transport positions. By positioning the support wheels coaxially (so that the rotational axes of the wheels coincide) in the working and/or transport positions, the stability of the agricultural machine is greatly improved.

Advantageously, the support carriage includes at least one actuator for driving the first and second support arms between the working positions and the transport positions. Optionally, separate actuators may be provided for driving the first and second support arms.

Advantageously, the support carriage includes an actuator for driving rotation of the cross-member relative to the drawbar between the working configuration and the transport configuration.

Preferably, the first support arm has an effective radius R1 and the second support arm has an effective radius R2 where R1 < R2. This arrangement and the relative dimensions of the stub arms and the support arms provide in one embodiment of the invention a structure that enables pivoting movement of the first and second support arms between the respective working and transport positions.

According to another aspect of the invention there is provided an agricultural machine that includes a support carriage according to any one of the preceding statements of invention. Advantageously, the agricultural machine comprises a mower. However, the agricultural machine may be another type of machine, for example a rake, tedder, swathing machine, choppers, packers, rollers and seeding bars.

If the agricultural machine comprises a mower, it preferably includes a cutter bar and a plurality of rotating cutter heads that are supported by the cutter bar, wherein the cutter bar extends substantially parallel to the cross-member.

An embodiment of the invention will now be described, by way of example, with reference to the accompanying drawings, in which:
Figure 1 is an isometric view of a trailed mower;
Figure 2 is an isometric view of the support carriage for the trailed mower of Figure 1;
Figure 3 is a top plan view of the trailed mower in a working configuration;
Figure 4 is a top plan view of the support carriage in a working configuration;
Figure 5 is an isometric view of the trailed mower in a transport configuration;
Figure 6 is an isometric view of the support carriage in a transport configuration;
Figure 7 is a top plan view of the trailed mower in a transport configuration, and
Figure 8 is a top plan view of the support carriage in a transport configuration.

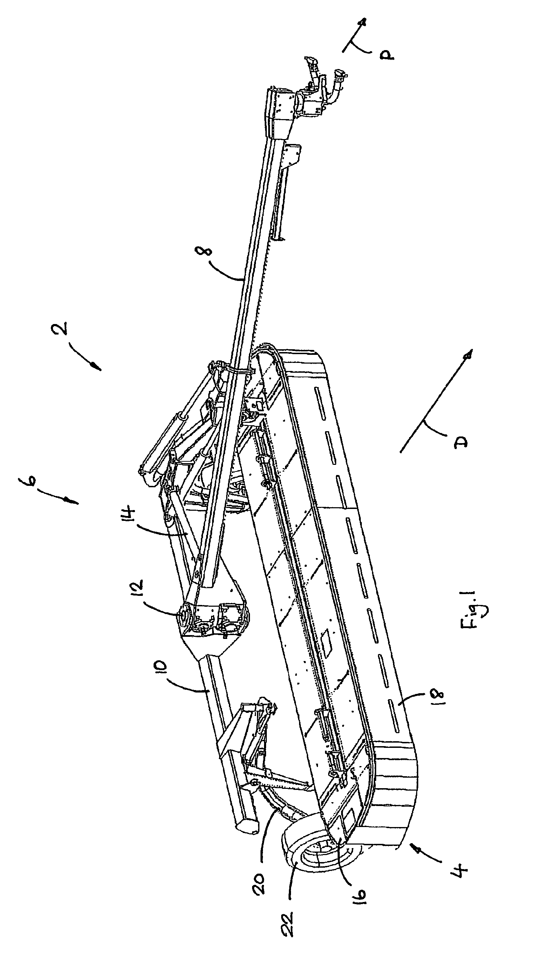

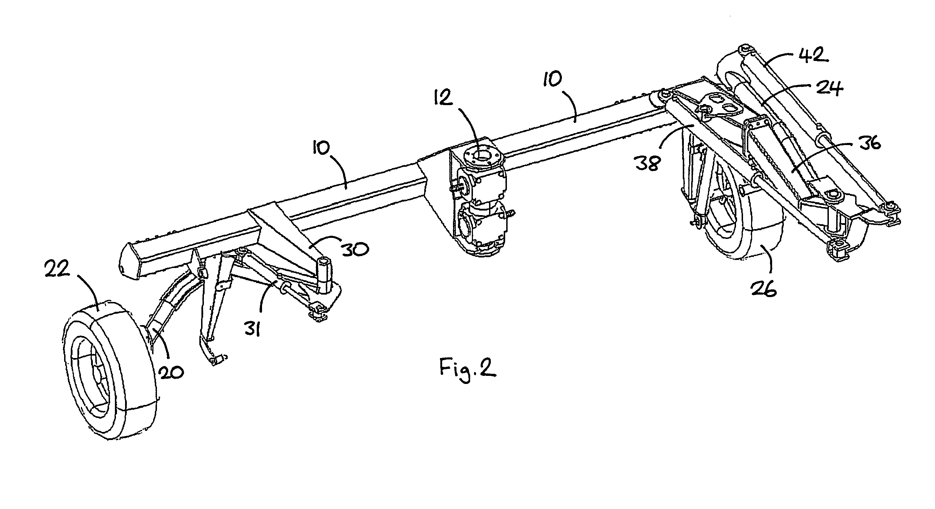

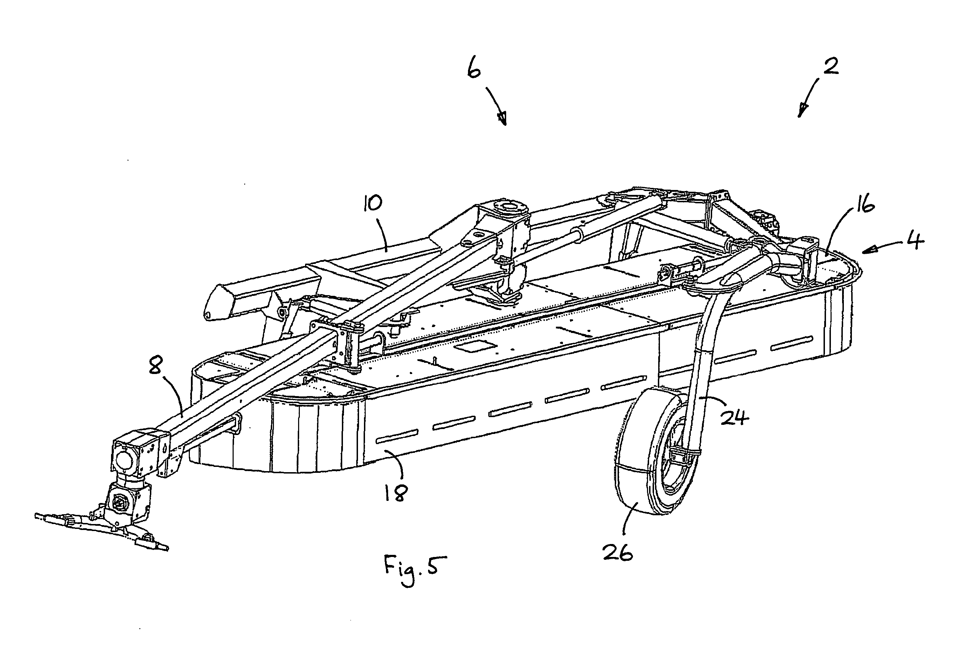

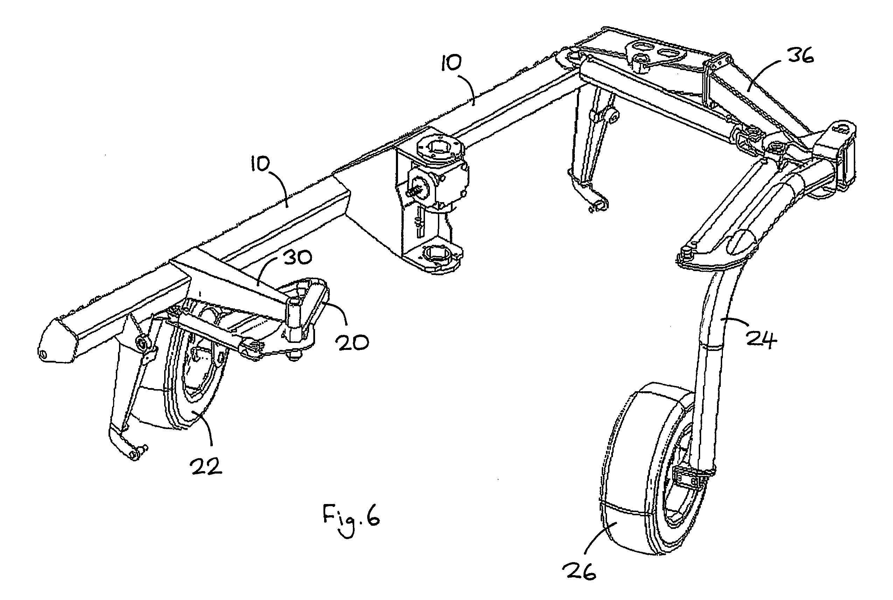

The agricultural machine shown in Figures 1-8 is a trailed mower 2 that comprises a mower unit 4 supported by a support carriage 6 or wheeled frame. The support carriage 6 includes a drawbar 8 that is adapted to be attached to a tractor (not shown) so that the mower 2 can be drawn behind the tractor in a travelling direction D. The drawbar 8 is pivotably attached to an elongate cross-member 10 by a pivot joint 12. The cross-member 10 can be pivoted relative to the drawbar 8 between a working configuration as shown in Figures 1-4 in which the cross-member 10 extends substantially perpendicular to the travelling direction D, and a transport configuration shown in Figures 5-8 in which the cross-member 10 extends at an acute angle to the transport direction D, typically at an angle of approximately 20°. The angle between the drawbar 8 and the cross-member 10 can be controlled by means of an actuator 14, for example a hydraulic ram.

When the mower 2 is in the working configuration shown in Figures 1-4, the travelling direction D of the mower is parallel to the path P of the tractor but is usually displaced to one side of the path P. When the mower 2 is in the transport configuration as shown in Figures 5-8, the travelling direction D of the mower 2 is much closer to or substantially coincides with the path P of the tractor.

The mower unit 4 is conventional and may for example be similar to that described in WO 9918769A. It includes a cover comprising a top plate 16 and a peripheral skirt 18. Beneath the skirt the mower unit includes a cutter bar which supports a number of rotating cutter drums or discs (not shown).

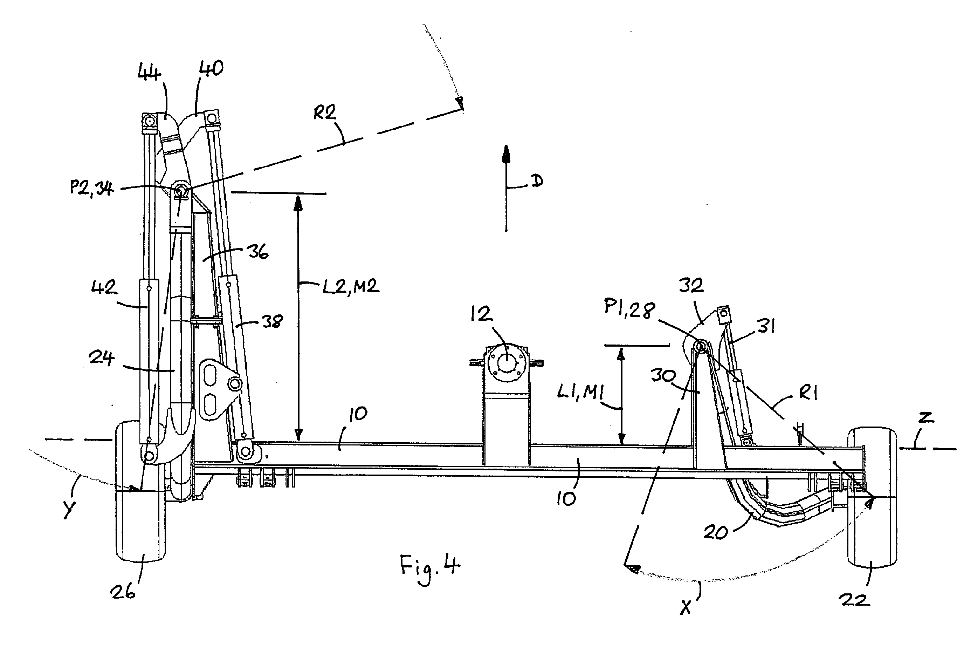

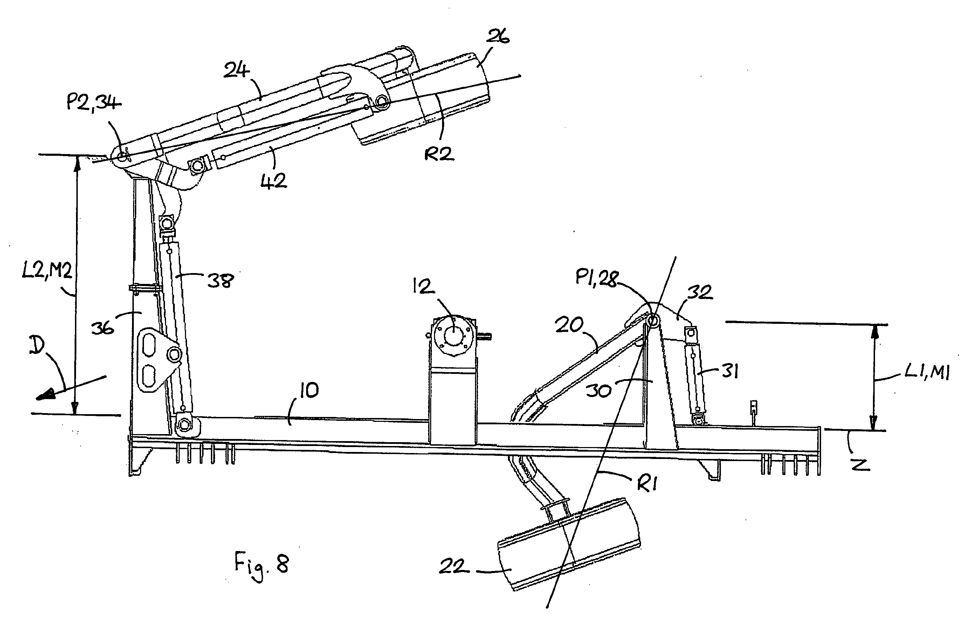

The support carriage 6 includes a first support arm 20 for a first support wheel 22 and a second support arm 24 for a second support wheel 26. The first support arm 20 is pivotably attached via a first pivot joint 28 to a first stub arm 30 of length L1 that extends forwards from the cross-member 10 (parallel to the travelling direction D when the mower is in the working configuration). The first support arm 20 has an effective radius R1 allowing the support wheel 22 to rotate in an arc of radius R1 about the pivot joint 28 between the working position shown in Fig. 4 and the transport position shown in Fig. 8.

Rotation of the first support arm 20 about the pivot joint 28 is controlled by an actuator 31, for example a hydraulic ram, that acts between the cross-member 10 and a crank arm 32 attached to the pivot end of the first support arm 20. The first support arm 20 is able to rotate about the axis of the first pivot joint 28 through an angle X between the working position and the transport position, where the angle X is in the range 30° < X < 120°. Preferably the angle X is in the range 70° < X < 90°, and more preferably the angle X is approximately 80°.

The second support arm 24 has an effective radius R2 and is pivotably attached via a second pivot joint 34 to a second sub arm 36 of length L2 that extends forwards from the cross-member 10 (parallel to the travelling direction D when the mower is in the working configuration). In this embodiment, rotation of the second support arm 24 about the second pivot axis 34 is controlled by a third actuator 38 and a fourth actuator 42. The third actuator 38 is connected between the cross-member 10 and a second crank arm 40 that is mounted for pivoting movement about the pivot joint 34, and the fourth actuator 42 is connected between a third crank arm 44 and the free end of the pivot arm 24. The second and third crank arms 40, 42 are connected to each other for rotation together about the axis of the pivot joint 34. The third and fourth actuators 38, 42 operate together to control rotation of the second support arm 24. Alternatively, the third and fourth actuators 38, 42 could be replaced by a single actuator.

The second support wheel 26 is able to rotate with the second support arm 24 in an arc of radius R2 about the axis of the second pivot joint 34 between the working position shown in Fig. 4 and the transport position shown in Fig. 8. The second support arm 24 rotates through an angle Y between the working and transport positions, where the angle Y is substantially equal to the angle X + 180°. In a typical example, the angle X is 80° and the angle Y is 260°.

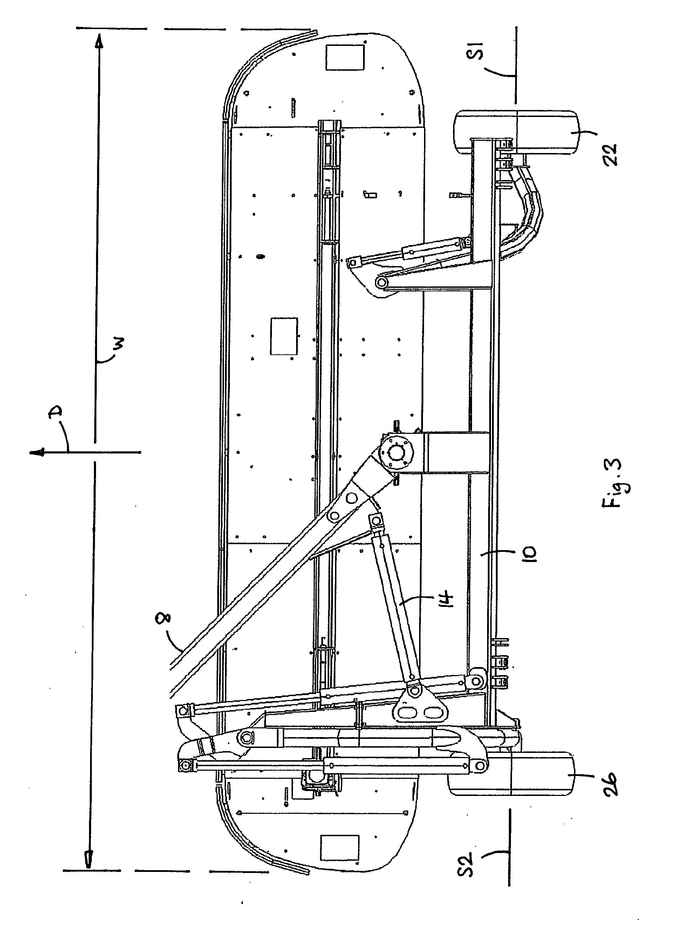

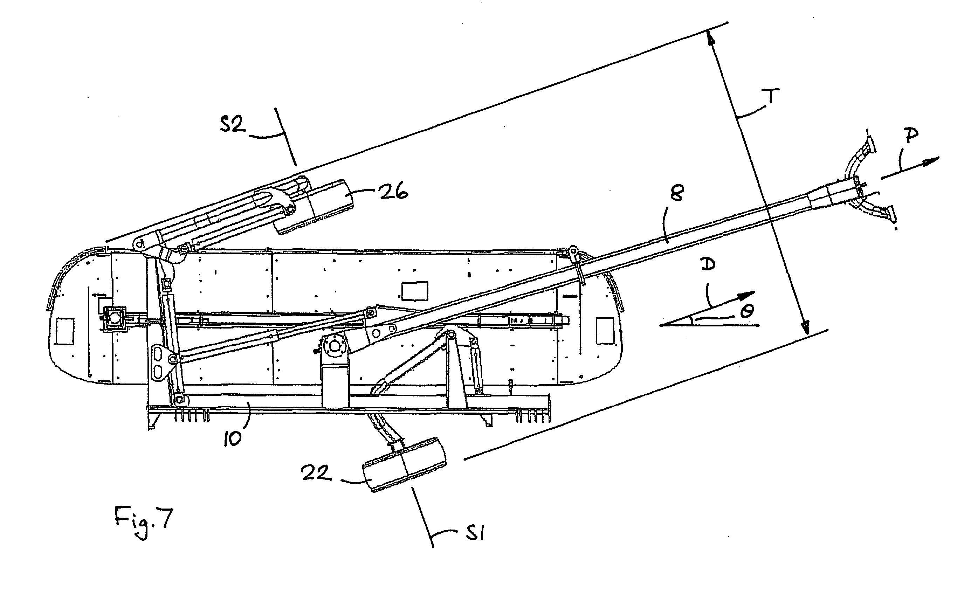

It should be noted that because the second support arm 24 pivots through a pivot angle Y that is equal to the angle X + 180°, the rotational axes of the first and second support wheels 22, 26 are parallel to one another both when the wheels are in the working positions as shown in Figure 4, and also when they are in the transport positions shown in Figure 8. Furthermore, the effective radii R1, R2 and the first and second support arms 20, 24 and the lengths L1, L2 of the stub arms 30, 36 are selected so the rotational axes of the wheels 22, 26 are substantially coaxial in both the working configuration and the transport configuration. This can be seen most clearly in Figures 3 and 7. Specifically, in this embodiment, R1<R2 and L1<L2. Because of this arrangement the wheels 22, 26 provide ideal and stable support for the mower unit 4 both during a working operation and also during transportation.

When the mower 2 is in the working configuration the cross-member 10 extends substantially perpendicular to the travelling direction D providing a working width W as shown most clearly in Figure 3. When the mower 2 is in the transport configuration the cross-member 10 extends at an acute angle to the travelling direction D, typically at an angle of approximately 20°. The transport width T of the mower 2 as shown in Figure 7 is therefore much less than the working width W. It will be noted that when the mower 2 is in the transport configuration the travelling direction D of the mower 2 is very close to or substantially coincides with the path P of the tractor. This makes it possible to transport the mower 2 down public roads and lanes, and to manoeuvre the mower 2 through relatively narrow gateways and entrances.

In order to adjust the mower 2 from the working configuration shown in Figure 3 to the transport configuration shown in Figure 7, the drawbar actuator 14 is actuated hydraulically, causing the cross-member 10 to rotate about the pivot joint 12 relative to the drawbar 8. At the same time, the second, third and fourth actuators 31, 38, 42 for the first and second support arms 20, 24 are actuated, causing the first support arm 20 to rotate through angle X from the working position shown in Figure 3 to the transport position shown in Figure 7, and causing the second support arm 24 to rotate through angle Y from the working position shown in Figure 3 to the transport position shown in Figure 7. It should be noted however that the support arms 20, 24 do not have to rotate synchronously between the working position and the transport position.

The process described above can be reversed to adjust the mower back to the working configuration.

## Claims

1. A support carriage (6) for an agricultural machine (4) that is configured to be towed behind a tractor, wherein the support carriage (6) is adjustable between a working configuration in which the agricultural machine has a working width W and a transport configuration in which the agricultural machine has a transport width T that is less than the working width W, the support carriage (6) including a drawbar (8), a cross-member (10) that is attached to the drawbar and is pivotable relative thereto between a working configuration and a transport configuration, a first support wheel (22) mounted on a first support arm (20) that is pivotably attached to the cross-member (10) for rotation about a first pivot axis (28), and a second support wheel (26) mounted on a second support arm (24) that is pivotably attached to the cross-member (10) for rotation about a second pivot axis (34), wherein the first support arm (20) is pivotable through an angle X between a working position and a transport position, and the second support arm (24) is pivotable through an angle Y between a working position and a transport position where Y is substantially equal to X + 180°, and wherein the first support arm (20) is connected to the cross member (10) towards a first end of the cross-member, and the second support arm (24) is connected to the cross member (10) towards a second end of the cross-member; **characterised in that** the first support arm (20) is connected to the cross member (10) by a first stub arm (30) and the second support arm (24) is connected to the cross member by a second stub arm (36), wherein the first stub arm (30) has a length L1 and the second stub arm (36) has a length L2 where L1 < L2.

2. A support carriage according to claim 1, wherein the angle X is in the range 30° < X < 120°, preferably 70° < X < 90°.

3. A support carriage according to claim 1 or claim 2, in which the first and second support arms (20,24) are pivotable between respective working positions in which the support wheels (22,26) are positioned at opposite ends of the cross-member (10), and respective transport positions in which the support wheels (22,26) are positioned on opposite sides of the cross-member (10).

4. A support carriage according to claim 3, wherein the first and second support wheels (22,26) are substantially coaxially located when the first and second support arms (20,24) are in the working positions.

5. A support carriage according to claim 3, wherein the first and second support wheels (22,26) are substantially coaxially located when the first and second support arms (20,24) are in the transport positions.

6. A support carriage according to any one of the preceding claims, including at least one actuator (31,38,42) for driving the first and second support arms (20,24) between the working positions and the transport positions.

7. A support carriage according to any one of the preceding claims, including an actuator (14) for driving rotation of the cross-member (10) between the working configuration and the transport configuration.

8. A support carriage according to any one of the preceding claims, wherein the first support arm (20) has an effective radius R1 and the second support arm (24) has an effective radius R2 where R1 < R2.

9. An agricultural machine that includes a support carriage (6) according to any one of the preceding claims.

10. An agricultural machine according to claim 9, wherein the agricultural machine comprises a mower (2).

11. An agricultural machine according to claim 10, wherein the mower (2) includes a cutter bar and a plurality of rotating cutter heads that are supported by the cutter bar, and wherein the cutter bar extends substantially parallel to the cross-member (10).

## Patentansprüche

1. Trägerfahrgestell (6) für eine landwirtschaftliche Maschine (4), das konfiguriert ist, um hinter einer Zugmaschine gezogen zu werden, wobei das Trägerfahrgestell (6) zwischen einer Arbeitskonfiguration, in welcher die landwirtschaftliche Maschine eine Arbeitsbreite W hat, und einer Transportkonfiguration, in welcher die landwirtschaftliche Maschine eine Transportbreite T hat, die kleiner als die Arbeitsbreite W ist, verstellbar ist, wobei das Trägerfahrgestell (6) eine Zugstange (8), einen Querträger (10), der an der Zugstange angebracht und relativ dazu zwischen einer Arbeitskonfiguration und einer Transportkonfiguration schwenkbar ist, ein erstes Stützrad (22), das an einem ersten Tragarm (20) montiert ist, der zur Drehung um eine erste Schwenkachse (28) schwenkbar an dem Querträger (10) angebracht ist, und ein zweites Stützrad (26), das an einem zweiten Stützarm (24) montiert ist, der zur Drehung um eine zweite Schwenkachse (34) schwenkbar an dem Querträger (10) angebracht ist, wobei der erste Stützarm (20) um einen Winkel X zwischen einer Arbeitsstellung und einer Transportstellung verschwenkt werden kann und der zweite Stützarm (24) um einen Winkel Y zwischen einer Arbeitsstellung und einer Transportstellung verschwenkt werden kann, wobei Y im Wesentlichen gleich X + 180° ist, und wobei der erste Stützarm (20) zu einem ersten Ende des Querträgers hin mit dem Querträger (10) verbunden ist und der zweite Stützarm (24) zu einem zweiten Ende des Querträgers hin mit dem Querträger verbunden ist;
**dadurch gekennzeichnet, dass** der erste Stützarm (20) durch einen ersten Armstummel (30) mit dem Querträger (10) verbunden ist und der zweite Stützarm (24) durch einen zweiten Armstummel (36) mit dem Querträger verbunden ist, wobei der erste Armstummel (30) eine Länge L1 und der zweite Armstummel (36) eine Länge L2 hat, wobei L1<L2 ist.

2. Trägerfahrgestell nach Anspruch 1, wobei der Winkel X im Bereich von 30° < X < 120° ist, vorzugsweise 70° < X < 90°.

3. Trägerfahrgestell nach Anspruch 1 oder Anspruch 2, bei dem der erste und der zweite Stützarm (20, 24) zwischen jeweiligen Arbeitsstellungen, in denen die Stützräder (22, 26) an entgegengesetzten Enden des Querträgers (10) positioniert sind, und jeweiligen Transportstellungen, bei denen die Stützräder (22, 26) an entgegengesetzten Seiten des Querträgers (10) positioniert sind, verschwenkt werden können.

4. Trägerfahrgestell nach Anspruch 3, wobei das erste und das zweite Stützrad (22, 26) im Wesentlichen koaxial liegen, wenn der erste und der zweite Stützarm (20, 24) in den Arbeitsstellungen sind.

5. Trägerfahrgestell nach Anspruch 3, wobei das erste und das zweite Stützrad (22, 26) im Wesentlichen koaxial liegen, wenn der erste und der zweite Stützarm (20, 24) in den Transportstellungen sind.

6. Trägerfahrgestell nach einem der vorhergehenden Ansprüche, das wenigstens ein Stellglied (31, 38, 42) zum Antreiben des ersten und des zweiten Stützarms (20, 24) zwischen den Arbeitsstellungen und den Transportstellungen beinhaltet.

7. Trägerfahrgestell nach einem der vorhergehenden Ansprüche, das ein Stellglied (14) zum Antreiben der Drehung des Querträgers (10) zwischen der Arbeitskonfiguration und der Transportkonfiguration beinhaltet.

8. Trägerfahrgestell nach einem der vorhergehenden Ansprüche, wobei der erste Stützarm (20) einen effektiven Radius R1 hat und der zweite Stützarm (24) einen effektiven Radius R2 hat, wobei R1 < R2 ist.

9. Landwirtschaftliche Maschine, die ein Trägerfahrgestell (6) nach einem der vorhergehenden Ansprüche.

10. Landwirtschaftliche Maschine nach Anspruch 9, wobei die landwirtschaftliche Maschine ein Mähwerk (2) umfasst.

11. Landwirtschaftliche Maschine nach Anspruch 10, wobei das Mähwerk (2) einen Mähbalken und eine Vielzahl von rotierenden Messerköpfen hat, die von dem Mähbalken getragen werden, und wobei der Mähbalken im Wesentlichen parallel zum Querträger (10) verläuft.

## Revendications

1. Chariot intermédiaire (6) pour machine agricole (4), pouvant être remorqué derrière un tracteur, dans lequel le chariot intermédiaire (6) peut être réglé entre une configuration de fonctionnement, dans laquelle la machine agricole a une largeur de fonctionnement W, et une configuration de transport, dans laquelle la machine agricole a une largeur de transport T plus petite que la largeur de fonctionnement W, le chariot intermédiaire (6) comprenant une barre d'attelage (8), une traverse (10) fixée à la barre d'attelage et pouvant pivoter par rapport à celle-ci entre une configuration de fonctionnement et une configuration de transport, une première roue-support (22) fixée sur un premier bras porteur (20) lui-même fixé en pivot sur la traverse (10) en rotation autour d'un premier axe de pivot (28), et une deuxième roue-support (26) fixée sur un deuxième bras porteur (24) lui-même fixé en pivot sur la traverse (10) en rotation autour d'un deuxième axe de pivot (34), dans lequel le premier bras porteur (20) peut pivoter d'un angle X entre une position de fonctionnement et une position de transport, et le deuxième bras porteur (24) peut pivoter d'un angle Y entre une position de fonctionnement et une position de transport, où Y est essentiellement égal à X + 180 °, et dans lequel le premier bras porteur (20) est relié à la traverse (10) en direction d'une première extrémité de la traverse, et le deuxième bras porteur (24) est relié à la traverse (10) en direction d'une deuxième extrémité de la traverse ; **caractérisé en ce que** le premier bras porteur (20) est relié à la traverse (10) par un premier bras de liaison (30) et le deuxième bras porteur (24) est relié à la traverse par un deuxième bras de liaison (36), dans lequel le premier bras de liaison (30) a une longueur L1 et le deuxième bras de liaison (36) a une longueur L2, où L1 < L2.

2. Chariot intermédiaire selon la revendication 1, dans lequel l'angle X est compris dans la plage 30° < X < 120°, de préférence 70° < X < 90°.

3. Chariot intermédiaire selon la revendication 1 ou 2, dans lequel les premier et deuxième bras porteurs (20, 24) peuvent pivoter entre des positions de fonctionnement respectives, dans lesquelles les roues-support (22, 26) sont positionnées à des extrémités opposées de la traverse (10), et des positions de transport respectives, dans lesquelles les roues-support (22, 26) sont positionnées à des côtés opposés de la traverse (10).

4. Chariot intermédiaire selon la revendication 3, dans lequel les première et deuxième roues-support (22, 26) sont positionnées de manière essentiellement coaxiale, lorsque les premier et deuxième bras porteurs (20, 24) sont dans les positions de fonctionnement.

5. Chariot intermédiaire selon la revendication 3, dans lequel les première et deuxième roues-support (22, 26) sont positionnées de manière essentiellement coaxiale, lorsque les premier et deuxième bras porteurs (20, 24) sont dans les positions de transport.

6. Chariot intermédiaire selon l'une quelconque des revendications précédentes, comprenant au moins un actionneur (31, 38, 42) permettant d'entraîner les premier et deuxième bras porteurs (20, 24) entre les positions de fonctionnement et les positions de transport.

7. Chariot intermédiaire selon l'une quelconque des revendications précédentes, comprenant un actionneur (14) permettant d'entraîner la rotation de la traverse (10) entre la configuration de fonctionnement et la configuration de transport.

8. Chariot intermédiaire selon l'une quelconque des revendications précédentes, dans lequel le premier bras porteur (20) a un rayon réel R1 et le deuxième bras porteur (24) a un rayon réel R2, où R1 < R2.

9. Machine agricole comprenant un chariot intermédiaire (6) selon l'une quelconque des revendications précédentes.

10. Machine agricole selon la revendication 9, dans laquelle la machine agricole comprend une faucheuse (2).

11. Machine agricole selon la revendication 10, dans laquelle la faucheuse (2) comprend une barre de coupe et une pluralité de têtes de coupe rotatives soutenues par la barre de coupe, et dans laquelle la barre de coupe s'étend essentiellement parallèlement à la traverse (10).
